# EUROPEAN PATENT APPLICATION

(11) **EP 3 315 588 A1**
(43) Date of publication of application: **02.05.2018**
(21) Application number: 16813569.7
(22) Date of filing: 15.04.2016
(51) Int. Cl.: C10J 3/84, C10K 1/10, C10K 1/04, C10K 1/02

(54) **ULTRA HIGH PRESSURE COOLING AND PURIFICATION PROCESS AND APPARATUS FOR OIL PRODUCTION BIOMASS SYNGAS**

(30) Priority: 24.06.2015 CN 201510355110
(71) Applicant: Wuhan Kaidi Engineering Technology Research Institute Co., Ltd., Wuhan, Hubei 430212 (CN)
(72) Inventor: ZHANG, Yanfeng, Wuhan Hubei 430212 (CN); NIE, Hongtao, Wuhan Hubei 430212 (CN); XIA, Minggui, Wuhan Hubei 430212 (CN); LIU, Wenyan, Wuhan Hubei 430212 (CN); ZHANG, Liang, Wuhan Hubei 430212 (CN)
(74) Representative: Zeuner Summerer Stütz
(86) International application number: PCT/CN2016/079388
(87) International publication number: WO 2016/206453

(57) **Abstract**

An ultra high pressure cooling and purification process and apparatus for an oil production biomass syngas, the process comprising: (1) performing two-stage waste heat recovery and cyclone dust removal processing, with by-products of high pressure and low pressure steam, (2) removing a portion of heavy tar precipitated out from the biomass syngas by cooling in a second stage indirect heat exchange process, (3) further removing dust and lowering a temperature using a washing solution, (4) conducting deep removal of dust and coke using a moist air flow, and purging to remove remaining small amounts of dust and tar fog in the biomass syngas, and causing the pressure thereof to drop to 0.3-1 MPa, so as to obtain a biomass syngas having respective dust and tar fog contents of less then 10 mg/Nm3, and a temperature of < 45°C. The apparatus is mainly comprised of an integrated heat exchange and dust removal device, a packed tower scrubber and a wet electrostatic precipitator. By optimizing process plan design and controlling appropriate process parameters, the invention realizes stepped cooling of a biomass syngas, stepped recovery of waste heat, and stepped dust removal, and achieves the object of tar removal and cooling and purification.

## Description

### FIELD OF THE INVENTION

The present disclosure relates to syngas purification technologies, and more particularly to a method and apparatus for purifying and cooling biomass syngas

### BACKGROUND OF THE INVENTION

With the gradual depletion of fossil fuels, the development and utilization of renewable and clean biomass energy have received more and more attention and are under rapid development, and thus syngas and oil production with biomass has become an important research topic in the field of new energy development

Similar to the gas production with coal, the syngas production with biomass also necessitates the cooling, dedusting and other purification processes. At present, there are many researches on the methods of biomass gasification to produce syngas, but there are few researches on how to cool and purify biomass syngas. In most cases, the traditional method for cooling and washing coal gas is followed. The traditional method for preliminarily cooling coal gas includes indirect preliminary cooling, direct preliminary cooling, and indirect/direct preliminary cooling. The preliminary cooling mainly comprises cooling the coal gas exiting from a carbonization chamber to 22-35°C before it enters an electric tar trapper. During an indirect preliminary cooling process, the coal gas does not contact the cooling medium directly, only indirect heat transfer occurs between the two phases, and no mass transfer takes place; and the cooling and purification effects on the coal gas are good. During a direct preliminary cooling process, the coal gas is in direct contact with the aqueous ammonia sprayed, and both mass and heat transfer take place. Compared with the indirect preliminary cooling, the direct preliminary cooling has the characteristics of high cooling efficiency for coal gas, small resistance, low equipment cost, and large power consumption. The indirect/direct preliminary cooling is a combined process in which the coal gas is cooled indirectly and then directly, and which incorporates the advantages of both indirect and direct cooling. In addition, many coal gas dedusting methods are available, including precipitation, filtration, cyclone dust collection, electrostatic dust collection, water scrubbing or Venturi dust removal. The dust removal efficiency and resistance vary greatly with different processes.

In the conventional gas production with coal, the temperature of the crude coal gas exiting from the carbonization chamber is about 650°C; and the temperature of the syngas at an outlet of a modern fluidized bed biomass gasifier is generally 950°C or above, which is far greater than the temperature of the coal gas at the outlet of the carbonization chamber. If the method for preliminarily cooling coal gas is copied ignoring the fact that the temperature of the syngas at the outlet during the syngas production with biomass is higher than the temperature of the coal gas at the outlet during the gas production with coal, it is obvious that the cooling effect and the purification index of the biomass syngas cannot be achieved. Moreover, if the traditional method for purifying coal gas is simply simulated, there are still defects such as complex system, long process, high energy consumption, low efficiency, and poor stability and economy. Therefore, it is necessary to provide a cooling and purification process and apparatus for syngas produced in a biomass gasifier.

### SUMMARY OF THE INVENTION

In view of the above-described problems, it is one objective of the invention to provide a method and apparatus for purifying and cooling biomass syngas for oil production. Using the process and apparatus, the syngas experiences multi-stage treatments at a defined particular temperature under a defined particular pressure. The method is stable and efficient in cooling and purification, and the apparatus has relatively low manufacturing cost.

To achieve the above objective, in accordance with one embodiment of the invention, there is provided a method for purifying and cooling biomass syngas, the method comprising:
1) cooling biomass syngas having a temperature of 950°C or higher and a pressure of 3.0 MPa or higher output from a fluidized bed gasifier to 520-580°C using a first-stage indirect heat exchange with process water, and recycling waste heat to yield a first steam; then subjecting the biomass syngas to cyclone dust removal treatment; and further cooling the biomass syngas to a temperature of ≤ 210°C using a second-stage indirect heat exchange with process water, and recycling waste heat to yield a second steam;
2) collecting and removing a portion of heavy tar precipitating out of the biomass syngas during the second-stage indirect heat exchange;
3) carrying out dust removal and cooling using a scrub solution, to scrub off most of dust, tar droplets, and water soluble gases from the biomass syngas after the heat exchange and dust removing treatment, in which the temperature of scrubbed biomass syngas is controlled at 43-47°C; and
4) conducting deep removal of dust and tar with a wet gas stream, to sweep off remains of dust and tar fog in the scrubbed biomass syngas, and allowing the pressure to drop to 0.3-1 MPa, to obtain a cleaned biomass syngas having a dust and tar content of less than 10 mg/Nm³, and a temperature of below 45°C; a sensible heat recovery rate of the biomass syngas being greater than 80%.

In a class of this embodiment, in 1), during the first-stage indirect heat exchange, the biomass syngas is cooled to 550-570°C; and during the second-stage indirect heat exchange, the biomass syngas is cooled to 65-95°C.

In a class of this embodiment, in 1), during the first-stage indirect heat exchange, the biomass syngas is cooled to 555-565°C; and during the second-stage indirect heat exchange, the biomass syngas is cooled to 65-75°C.

In a class of this embodiment, in 1), the pressure of the first steam generated is 6.0-9.8 MPa, and the pressure of the second steam generated is 0.5-0.8 MPa.

In a class of this embodiment, in 1), the pressure of the first steam generated is 6.0-8.5 MPa, and the pressure of the second steam generated is 0.5-0.8 MPa.

In a class of this embodiment, in 1), the first steam generated is fed back to the fluidized bed gasifier, and used as a gasifying agent of a biomass fuel.

In a class of this embodiment, in 1), the biomass syngas output from the fluidized bed gasifier is controlled to have a temperature of 1000-1200°C, a pressure of 3.0-4.0 MPa, a dust content of < 20 g/Nm³, and a tar content of < 3 g/Nm³.

In a class of this embodiment, in 1), the second steam generated is used in 4) as a wet gas stream to sweep off the dust and tar fog in the biomass syngas.

In accordance with another embodiment of the present disclosure, there is provided an apparatus for purifying and cooling biomass syngas for oil production, the apparatus comprising an integrated heat exchange and dust removal device, a packed tower scrubber, and a wet electrostatic precipitator. The integrated heat exchange and dust removal device has an overall structure comprising sequentially a first heat exchanger, a cyclone separator, and a second heat exchanger connected in compact tandem. A gas inlet of the first heat exchanger is connected to a syngas outlet of a fluidized bed gasifier, a gas outlet of the second heat exchanger is connected to a gas inlet of the packed tower scrubber, a gas outlet of the packed tower scrubber is connected to an input port of the wet electrostatic precipitator, and an output port of the wet electrostatic precipitator is connected to a gas inlet of a gas tank.

In a class of this embodiment, a steam outlet of the first heat exchanger is connected to a gasifying agent inlet of the fluidized bed gasifier via a first steam conveying pipe.

In a class of this embodiment, a steam outlet of the second heat exchanger is connected to a wet gas stream inlet of the wet electrostatic precipitator via a second steam conveying pipe.

In a class of this embodiment, a dust outlet at a bottom of the cyclone separator is connected to a feed inlet of a bin pump, and a feed outlet of the bin pump is connected to an ash storage tank.

In a class of this embodiment, a tar outlet at a bottom of the second heat exchanger is connected to a feed inlet of a tar trough.

In a class of this embodiment, the output port of the wet electrostatic precipitator is further connected to a gas inlet of a tail gas incinerator.

Compared with the prior art, the method and apparatus for purifying and cooling biomass syngas of the present disclosure has the following advantages.
1. In the present disclosure, the temperature of the biomass syngas is defined at 950°C or higher, and the biomass syngas is subjected to multi-stage treatments under a pressure of 3.0 MPa or higher; and the high-pressure steam having a pressure of 6.0-9.8 MPa generated during the waste heat recovery is used as a gasifying agent of a biomass fuel. These allow the whole cooling and purification system to operate under an extra-high pressure, such that the gas flow rate is increased while the cooling and purification effects are ensured, thereby shortening the process flow and the treatment time, and greatly increasing the treatment efficiency. As a result, the whole treatment system is simple, and has a smooth process, a high cooling efficiency, a good purification effect, low energy consumption and good economic benefits. Especially, the use of high-pressure steam with a pressure of 6.0-8.5 MPa as a gasifying agent of a biomass fuel has resulted in an unexpected cooling and purification effect.
2. The cooling and purification process of the present disclosure includes two stages of cooling. In the first stage, the biomass syngas is cooled to 520-580°C, a temperature that is controlled to be above the condensation point of heavy tar, to avoid the condensation of tar in this stage. In the second stage, the biomass syngas is cooled to ≤ 210°C, so as to condensate and collect the heavy tar in this stage. Moreover, the biomass syngas is subjected to cyclone dust removal treatment in between the two stages. In this way, the massive collection and treatment of heavy tar are achieved, and quite good treatment conditions are also provided for subsequent dedusting treatment. After two stages of waste heat recovery under two different pressures, further dust removal and cooling, and deep removal of the tar are carried out, to finally obtain a treated biomass syngas with a dust level of < 10 mg/Nm³, a tar content of < 10 mg/Nm³, and a temperature of < 45°C, in which the sensible heat recovery rate is greater than 80%, and high- and low-pressure steam are obtained as by-products.
3. In the present disclosure, the biomass syngas is subjected to a slag solidification treatment in the gasifier, in which the high-pressure steam is used as a gasifying agent for providing pressure. That is, the high-pressure steam generated in the integrated heat exchange and dust removal device is input into the biomass gasifier as a gasifying agent for providing pressure to the purification apparatus. By adjusting the pressure of the steam, it can be ensured that the pressure head at an outlet of the biomass gasifier overcomes the resistance in the cooling and purification apparatus and maintains a positive pressure of 0.3-1 MPa (G) when reaches the gas inlet of the gas tank. In this way, the gasifier, the integrated heat exchange and dust removal device, the packed tower scrubber, the wet dust collector and other units are ensured to operate under a positive pressure, thereby preventing external air from leakage into the cooling and purification apparatus, and reducing the possibility of gas explosion; and further, the blower in the gasification procedure and the air compressor in the synthesis procedure are omitted, thus greatly reducing the overall energy consumption in the gasification and oil synthesis procedures, and solving the problems such as complex system, long process, high energy consumption, low efficiency, poor stability and economy, and low targeting performance existing in the traditional gas purification process.
4. In the apparatus of the present disclosure, an integrated heat exchange and dust removal device is adopted, in which high-temperature heat exchange and low-temperature heat exchange are arranged integrally, and a cyclone separator is built in therebetween, so the structure is compact to save the material, and the heat exchange efficiency is high, thereby greatly enhancing the treatment efficiency of the cooling and purification process. The dust and tar levels in the biomass syngas are relatively low, and preliminary dust removal is provided between two stages of heat exchangers by using the cyclone separator coming with the integrated heat exchange and dust removal device, thus greatly improving the dust removal efficiency. After the first-stage indirect heat exchange, the dust removal efficiency of the cyclone separator can be up to 90% or higher when the biomass syngas is cooled to 550-570°C; and the dust removal efficiency of the cyclone separator can be up to 99.9% or higher when the biomass syngas is cooled to 555-565°C.
5. Preliminary dust removal can be achieved by the integrated heat exchange and dust removal device, so as to save quantities of flushing water and energy consumption for water treatment, and also save the water treatment equipment. Moreover, the device is simple in arrangement and easy to operate, and materials are salved, resulting in considerable economic benefits.

### BRIEF DESCRIPTION OF THE DRAWINGS

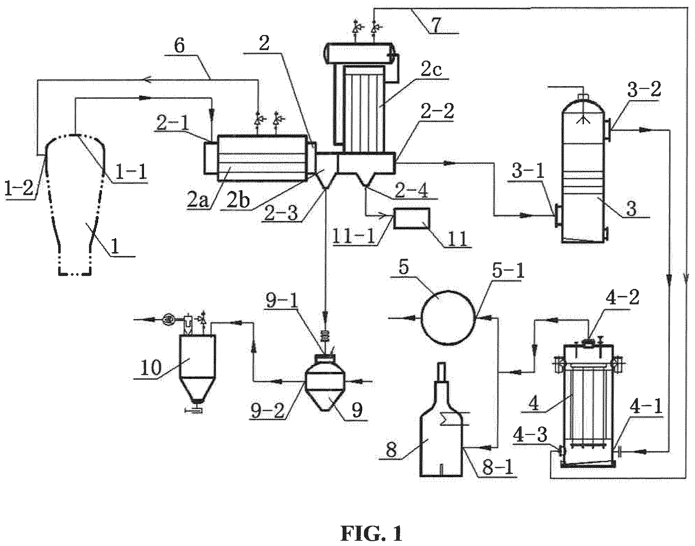

FIG. 1 is a schematic diagram of an ultrahigh-pressure cooling and purification apparatus for biomass syngas in accordance with one embodiment of the present disclosure.

### DETAILED DESCRIPTION OF THE EMBODIMENTS

For further illustrating the invention, experiments detailing a method and apparatus for purifying and cooling biomass syngas are described below. It should be noted that the following examples are intended to describe and not to limit the invention.

FIG. 1 shows an ultrahigh-pressure cooling and purification apparatus for biomass syngas for oil production. The apparatus comprises an integrated heat exchange and dust removal device **2,** a packed tower scrubber **3** and a wet electrostatic precipitator **4.** The integrated heat exchange and dust removal device **2** has an overall structure comprising sequentially a high-temperature heat exchanger **2a,** a cyclone separator **2b,** and a low-temperature heat exchanger **2c** connected in compact tandem. A gas inlet **2-1** of the high-temperature heat exchanger **2a** is connected to a syngas outlet **1-1** of a fluidized bed gasifier **1,** a gas outlet **2-2** of the low-temperature heat exchanger **2c** is connected to a gas inlet **3-1** of the packed tower scrubber **3,** a gas outlet **3-2** of the packed tower scrubber **3** is connected to an input port **4-1** of the wet electrostatic precipitator **4,** and an output port **4-2** of the wet electrostatic precipitator **4** is connected to a gas inlet **5-1** of a high-pressure gas tank **5,** which is a spherical ultrahigh-pressure gas tank. A high-pressure steam outlet of the high-temperature heat exchanger **2a** is connected to a gasifying agent inlet **1-2** of the fluidized bed gasifier **1** via a high-pressure steam conveying pipe **6.** A low-pressure steam outlet of the low-temperature heat exchanger **2c** is connected to a wet gas stream inlet **4-3** of the wet electrostatic precipitator **4** via a low-pressure steam conveying pipe **7.** A dust outlet **2-3** at a bottom of the cyclone separator **2b** is connected to a feed inlet **9-1** of a bin pump **9,** and a feed outlet **9-2** of the bin pump **9** is connected to an ash storage tank **10.** A tar outlet **2-4** at a bottom of the low-temperature heat exchanger **2c** is connected to a feed inlet **11-1** of a tar trough **11.** The output port **4-2** of the wet electrostatic precipitator 4 is further connected to a gas inlet **8-1** of a tail gas incinerator **8.**

A process implemented with the above equipment is as follows. A high-temperature ultrahigh-pressure biomass syngas output from the fluidized bed gasifier **1** is controlled to have a temperature of 1000-1200°C, a pressure of 3.0-4.0 MPa, a dust level of <20 g/Nm³, and a tar content of < 3 g/Nm³. The high-temperature ultrahigh-pressure biomass syngas is led out via the syngas outlet **1-1** at a top of the gasifier **1** after the slag solidification treatment in the gasifier, and then enters the integrated heat exchange and dust removal device **2.** The biomass syngas is subjected to a first-stage indirect heat exchange in the high-temperature heat exchanger **2a** to cool the high-temperature ultrahigh-pressure biomass syngas output from the gasifier **1** to 520-580°C, preferably to 550-570°C, and further preferably to 555-565°C. The high-pressure steam of 6.0-9.8 MPa and preferably 6.0-8.5 MPa generated during the waste heat recovery is delivered to the gasifier **1** and used as a gasifying agent of a biomass fuel. Subsequently, the high-temperature ultrahigh-pressure biomass syngas experiences a cyclone dust removal treatment by the cyclone separator **2b** in the integrated heat exchange and dust removal device **2,** and then enters the low-temperature heat exchanger **2c** for a second-stage indirect heat exchange, such that the biomass syngas is further cooled to a temperature of ≤ 210°C, preferably to 65-95°C, and more preferably to 65-75°C in the integrated heat exchange and dust removal device **2.** The low-pressure steam of 0.5-0.8 MPa generated during the waste heat recovery is supplied to the exterior. A portion of heavy tar precipitating out of the biomass syngas upon cooling during the second-stage indirect heat exchange process flows via the tar outlet **2-4** at the bottom of the low-temperature heat exchanger **2c** into the tar trough **11,** and removed by collection in the tar trough **11.** Next, the cooled and preliminarily-dedusted biomass syngas exits from the integrated heat exchange and dust removal device **2** via the gas outlet **2-2,** and enters the packed tower scrubber **3** via the gas inlet **3-1** of the packed tower scrubber **3,** where the biomass syngas is further dedusted and cooled by using an alkaline scrub solution such as caustic soda and a filler such as zeolite, to scrub most of the dust, tar droplets, and water soluble gases off from the biomass syngas, in which the temperature of the scrubbed biomass syngas is cooled to 43-47°C. Finally, the scrubbed biomass syngas is led out of the packed tower scrubber **3** via the gas outlet **3-2,** and input into the wet electrostatic precipitator **4** via the input port **4-1** of the wet electrostatic precipitator **4;** and the low-pressure steam generated during the second-stage indirect heat exchange process is also introduced therein as a wet gas stream for sweeping the dust and tar fog in the biomass syngas. The deep removal of dust and tar allows a small amount of dust and tar fog remaining in the biomass syngas to be removed, and allows the pressure of the biomass syngas to drop to 0.3-1 MPa, so as to obtain a cleaned biomass syngas having a dust and tar content of less than 10 mg/Nm³, and a temperature of below 45°C, with a sensible heat recovery rate being greater than 80%. Moreover, the qualified biomass syngas is delivered to the ultrahigh-pressure gas tank **5** via the gas inlet **5-1** of the ultrahigh-pressure gas tank **5** for storage or for use in a downstream procedure. The exhaust gas is disposed in the tail gas incinerator **8** connected in parallel with the ultrahigh-pressure gas tank **5,** during which a low-pressure steam is generated and supplied to the exterior. The dust separated by the cyclone separator **2b** in the integrated heat exchange and dust removal device **2** is collected by the bin pump **9** and then pneumatically conveyed to the ash storage tank **10** for storage and later reasonable utilization. The positive pressure of 0.3 MPa or higher remains at the gas inlet **5-1** of the high-pressure gas tank **5,** to ensure that the integrated heat exchange and dust removal device **2,** the packed tower scrubber **3,** the wet electrostatic precipitator **4** and the ultrahigh-pressure gas tank **5** can operate under an ultrahigh pressure.

## Claims

1. A method for purifying and cooling biomass syngas, the method comprising:
1) cooling biomass syngas having a temperature of 950°C or higher and a pressure of 3.0 MPa or higher from a fluidized bed gasifier to a temperature of 520-580°C using a first-stage indirect heat exchange, to yield a first steam;
subjecting the biomass syngas to cyclone dust removal treatment;
cooling the biomass syngas to a temperature of ≤ 210°C using a second-stage indirect heat exchange, to yield a second steam and heavy tar;
2) collecting the heavy tar evolved out of the biomass syngas during the second-stage indirect heat exchange process, and removing a portion of the heavy tar;
3) washing and cooling the biomass syngas using a scrub solution, to scrub off dust, tar droplets, and water-soluble gases from the biomass syngas, wherein a temperature of scrubbed biomass syngas is between 43 and 47°C; and
4) conducting deep removal of dust and tar with a wet gas stream, to remove dust and tar in the scrubbed biomass syngas, and allowing the pressure to drop to 0.3-1 MPa, to obtain a cleaned biomass syngas having a dust and tar content of less than 10 mg/Nm³, and a temperature of below 45°C.

2. The method of claim 1, **characterized in that** in 1), during the first-stage indirect heat exchange, the biomass syngas is cooled to 550-570°C; and during the second-stage indirect heat exchange, the biomass syngas is cooled to 65-95°C.

3. The method of claim 1, **characterized in that** in 1), during the first-stage indirect heat exchange, the biomass syngas is cooled to 555-565°C; and during the second-stage indirect heat exchange, the biomass syngas is cooled to 65-75°C.

4. The method of claim 1, 2 or 3, **characterized in that** in 1), the pressure of the first steam is 6.0-9.8 MPa, and the pressure of the second steam is 0.5-0.8 MPa.

5. The method of claim 1, 2 or 3, **characterized in that** in 1), the pressure of the first steam is 6.0-8.5 MPa, and the pressure of the second steam is 0.5-0.8 MPa.

6. The method of claim 1, 2 or 3, **characterized in that** in 1), the first steam generated is fed back to the fluidized bed gasifier, and used as a gasifying agent of a biomass fuel.

7. The method of claim 1, 2 or 3, **characterized in that** in 1), the biomass syngas output from the fluidized bed gasifier is controlled to have a temperature of 1000-1200°C, a pressure of 3.0-4.0 MPa, a dust content of < 20 g/Nm³, and a tar content of < 3 g/Nm³.

8. The method of claim 1, 2 or 3, **characterized in that** the second steam produced in 1) is used in 4) as a wet gas stream to sweep off the dust and tar in the biomass syngas.

9. An apparatus for purifying and cooling biomass syngas, the apparatus comprising:
an integrated heat exchange and dust removal device (2);
a packed tower scrubber (3); and
a wet electrostatic precipitator (4);
**characterized in that**
the integrated heat exchange and dust removal device (2) comprises a first heat exchanger (2a), a cyclone separator (2b), and a second heat exchanger (2c) connected in compact tandem in sequence; and
a gas inlet (2-1) of the first heat exchanger (2a) is connected to a syngas outlet (1-1) of a fluidized bed gasifier (1), a gas outlet (2-2) of the second heat exchanger (2c) is connected to a gas inlet (3-1) of the packed tower scrubber (3), a gas outlet (3-2) of the packed tower scrubber (3) is connected to an input port (4-1) of the wet electrostatic precipitator (4), and an output port (4-2) of the wet electrostatic precipitator (4) is connected to a gas inlet (5-1) of a gas tank (5).

10. The apparatus of claim 9, **characterized in that** a steam outlet of the first heat exchanger (2a) is connected to a gasifying agent inlet (1-2) of the fluidized bed gasifier (1) via a first steam conveying pipe (6).

11. The apparatus of claim 9 or 10, **characterized in that** a steam outlet of the second heat exchanger (2c) is connected to a wet gas stream inlet (4-3) of the wet electrostatic precipitator (4) via a second steam conveying pipe (7).

12. The apparatus of claim 9 or 10, **characterized in that** a dust outlet (2-3) at a bottom of the cyclone separator (2b) is connected to a feed inlet (9-1) of a bin pump (9), and a feed outlet (9-2) of the bin pump (9) is connected to an ash storage tank (10).

13. The apparatus of claim 9 or 10, **characterized in that** a tar outlet (2-4) at a bottom of the second heat exchanger (2c) is connected to a feed inlet (11-1) of a tar trough (11).

14. The apparatus of claim 9 or 10, **characterized in that** the output port (4-2) of the wet electrostatic precipitator (4) is further connected to a gas inlet (8-1) of a tail gas incinerator (8).
